Europäisches Patentamt

European Patent Office

Office européen des brevets

(11) Veröffentlichungsnummer : **0 121 786**
**B1**

(12) **EUROPÄISCHE PATENTSCHRIFT**

(45) Veröffentlichungstag der Patentschrift :
20.08.86

(21) Anmeldenummer : 84102542.2

(22) Anmeldetag : 09.03.84

(51) Int. Cl.⁴ : **B 23 K 35/22, B 23 K 35/04**

(54) Elektrode, insbesondere für WIG-Schweissverfahren.

(30) Priorität : 14.03.83 DE 3309069

(43) Veröffentlichungstag der Anmeldung :
17.10.84 Patentblatt 84/42

(45) Bekanntmachung des Hinweises auf die Patenterteilung : 20.08.86 Patentblatt 86/34

(84) Benannte Vertragsstaaten :
AT CH FR GB IT LI NL SE

(56) Entgegenhaltungen :
DE-A- 2 755 213
FR-A- 2 197 994
GB-A-   929 668
US-A- 2 515 559
SCHWEISSEN UND SCHNEIDEN, Band 29, Nr. 3, März 1977, Seiten 100-102, Düsseldorf, DE; U. MAYER: "Über das Abbrandverhalten von Wolframelektroden für das Wolfram-Inertgas-Schweissen unter verschiedenen Betriebsbedingungen"

(73) Patentinhaber : **MTU MOTOREN- UND TURBINEN-UNION MÜNCHEN GMBH**
Dachauer Strasse 665 Postfach 50 06 40
D-8000 München 50 (DE)

(72) Erfinder : Müller, Michael
Bergmannstrasse 5
D-8000 München 2 (DE)
Erfinder : Mautner, Dietmar
Reipertshofen Nr. 1
D-8061 Hebertshausen (DE)

## Beschreibung

In vielen Bereichen der metallverarbeitenden Industrie werden Schweißarbeiten mit dem WIG-Verfahren (Wolfram-Inert-Gas-Verfahren) durchgeführt. Die dabei (verwendeten Wolfram-Elektroden, als Träger des Schweißlichtbogens, werden zur Verbesserung ihrer Zündeigenschaften mit oxidischen Zusätzen, im Regelfall Thoriumoxid, dotiert.

Bei den derzeit im Einsatz befindlichen Elektroden nimmt die Zündwilligkeit mit der Häufigkeit der Zündvorgänge verhältnismäßig stark ab. Ein berührungsfreies Zünden ist bereits nach etwa zehnmaligem Wiederzünden bei nur kurzer Stromabschaltung und etwa zehn Sekunden nach der Beendigung der Schutzgasnachströmung in den meisten Fällen nicht mehr möglich. Durch die geringen Standzeiten dieser Elektroden werden die Kosten der Fertigprodukte stark erhöht.

Der Erfindung liegt die Aufgabe zugrunde, die genannten Nachteile bisher im Einsatz befindlicher Elektroden zu beseitigen und eine Elektrode zu schaffen, die sich durch optimale Zündeigenschaften beim berührungslosen Zünden auszeichnet und dabei gleichzeitig vergleichsweise hohe Standzeiten und Dauerbelastungen gewährleisten soll. Insbesondere im Rahmen des erwähnten WIG-Schweißverfahrens soll die Elektrode aufgabengemäß ferner einen äußerst rasch erzeugbaren, stabilen und « sauberen » Lichtbogen erzeugen lassen, der zu keinen nennenswerten, für die Zündwilligkeit nachteilhaften Oberflächenveränderungen der Elektrodenspitzen führt.

Die gestellte Aufgabe ist durch den Patentanspruch erfindungsgemäß gelöst.

Hieraus resultiert eine vergleichsweise grobe $ThO_2$-Verteilung mit vergleichsweise großer Zeiligkeit des Wolfram-$ThO_2$-Gefüges. Es kann je nach Einsatz der Elektrode sowohl eine ungeglühte als auch eine geglühte und damit rekristallisierte Elektrode (2 200 °C/1 h) angewandt und damit in jedem dieser Einsatzfälle eine optimale zündwillige Elektrode geschaffen werden, deren Zündfähigkeit nachweislich um das 10- bis 20fache höher als diejenige bisher bekannter Elektroden zu veranschlagen ist.

Entgegen den bisherigen, sich über Jahrzehnte erstreckenden, weitestgehend vergeblichen Bemühungen, vor allen Dingen zu einem verbesserten Zündverhalten durch eine gleichmäßige und feine Verteilung des $ThO_2$ ($ThO_2$-Gehalt bis 4 %, $ThO_2$-Partikelgröße von 0,5 bis 5 $\mu$m) gelangen zu wollen, ist es dem mutigen Schritt der Erfinder gegenüber der genannten diesbezüglichen bisherigen Technologie zuzuschreiben, durch den umgekehrten Schritt hinsichtlich der angegebenen vergröberten Wolfram-$ThO_2$-Werkstoffstruktur zum genannten Erfolg gelangt zu sein.

Im Rahmen eines komplett unterschiedlichen Problem-kreises, nämlich zur Herstellung bruchfester, stabiler, die Fertigung nicht beeinträchtigender Wolframdrähte oder -fäden, ist es aus der FR-A-2 197 994 bekannt, den Thoriumoxid-gehalt mit 1 bis 2 % zu veranschlagen und dabei möglichst eine unterhalb von 4 $\mu$m liegende Thorium-oxidpartikelgröße zugrundezulegen.

Im Rahmen des dabei zugrundeliegenden Dispersionsverfahrens soll also einerseits im Wege der Rekristallisation eine möglichst homogen ausgeprägte und verteilte Wolframkornstruktur erzielbar sein.

Andererseits soll dann im bekannten Fall — im Gegensatz zu herkömmlichen Pulver-Metallurgie-Verfahren — unter Verwendung des angegebenen Thoriumoxidgehalts — eine Thoriumoxiddispersion mit möglichst schwach ausgeprägter $ThO_2$-Partikeldimensionierung bei zugleich räumlich gleichförmiger Partikelverteilung erzielbar sein.

U. a. wird dann in der dem vorliegenden bekannten Fall zugrunde liegenden Druckschrift (FR-A-2 197 994) auf den Nachteil einer verhältnismäßig groben $ThO_2$-Partikelstruktur verwiesen ($ThO_2$-Gehalt : 2 % bei einer $ThO_2$-Partikelgröße von 7 $\mu$m).

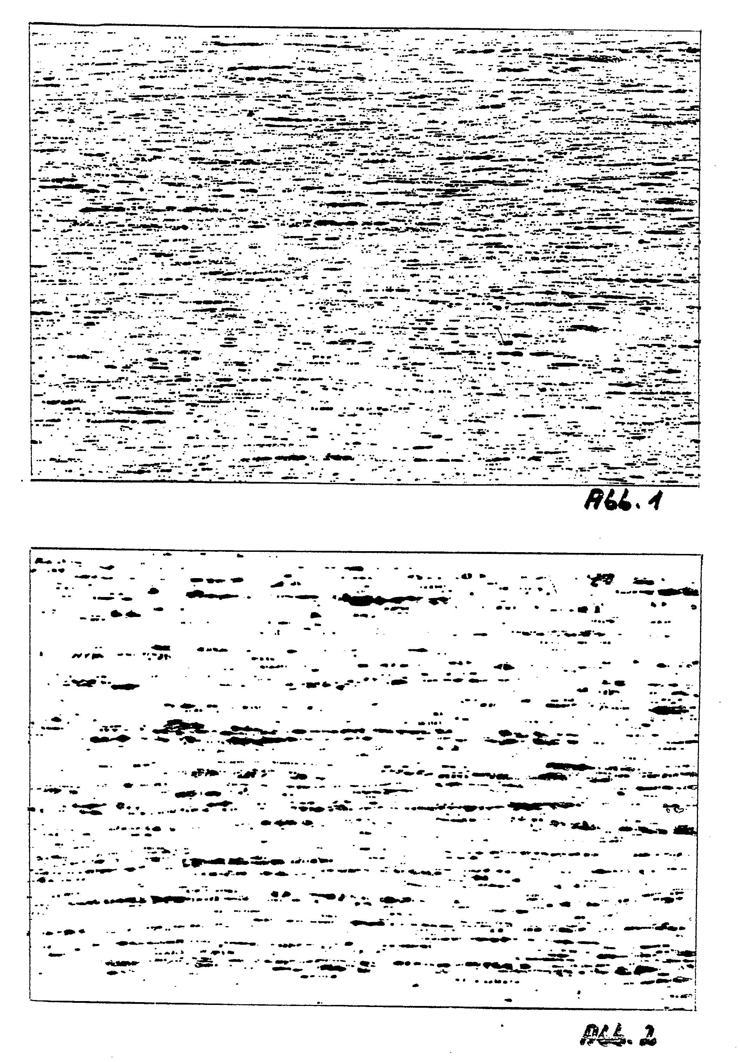

Abb. 1 veranschaulicht anhand einer Fotoreproduktion die 200fache Vergrößerung des Werkstoffgefüges einer marktgängigen Wolframelektrode mit der vergleichsweise feinen $ThO_2$-Verteilung bei einem $ThO_2$-Gehalt von 3 %, und damit einhergehender verhältnismäßig enger Zeiligkeit des Gefüges ($ThO_2$-Verteilung entsprechend den sich aus dem übrigen Gefüge dunkel abhebenden Stellen).

Abb. 2 veranschaulicht demgegenüber eine erfindungsgemäße Elektrodenwerkstoffstruktur, die durch entsprechende $ThO_2$-Grobverteilung gemäß den dunkel aufscheinenden und sich aus dem übrigen Werkstoff abhebenden Stellen zu dem angegebenen durchschlagenden Erfolg gegenüber Bekanntem führt (hier ebenfalls in 200facher Vergrößerung), wobei in Abb. 2 ein Thoriumoxidgehalt für die Wolframelektrode von 4 % und eine $ThO_2$-Partikelgröße bis zu 12 $\mu$m zugrunde gelegt ist.

Vom Grundsatz wäre hierzu anzumerken, daß unter Zugrundelegung eines $ThO_2$-Gehalts von 2 bis 4 % die Zündwilligkeit mit zunehmender Korngröße im Rahmen des angegebenen Bereichs (6 bis 12 $\mu$m) zunimmt.

Durch die Verwendung der erfindungsgemäßen Elektrode können vergleichsweise unkomplizierte WIG-Schweißgeräte zum Einsatz kommen, die also keine besonderen elektronischen Einrichtungen im Interesse einer verbesserten Zündwilligkeit erforderlich machen.

## Patentanspruch

Verwendung eines Drahtes als Elektrode, insbesondere für WIG-Schweißverfahren, bei dem der durch berührungsloses Zünden entstehende Schweißlichtbogen zwischen der Elektrodenspitze und dem Werkstück innerhalb einer inerten Gasatmosphäre brennt, und der Schweißmaterialauftrag mit einem gesondert geführten Schweißdraht erfolgt, wobei die Elektrode aus Wolfram mit Thoriumoxidbestandteilen besteht und einen Thoriumoxidgehalt von 2 bis 4 % sowie eine Thoriumoxid-Partikelgröße von 6 bis 12 μm aufweist.

## Claim

Utilisation of a wire as an electrode, particularly for the tungsten-inert gas welding process, wherein the welding arc produced by contact-less ignition between the tip of the electrode and the workpiece burns within an inert gas atmosphere, and the application of welding material is effected with a welding wire passed separately, the electrode consisting of tungsten with thorium oxide constituents and exhibiting a thorium oxide content of 2 to 4 % as well as a thorium oxide particle size of 6 to 12 μm.

## Revendication

Utilisation d'un fil métallique ou d'une baguette, en particulier pour le procédé de soudure TIG, dans laquelle l'arc de soudure, qui se forme par amorçage sans contact entre la pointe de l'électrode et la pièce à souder, brûle dans une atmosphère de gaz inerte, et l'apport de matière de soudure s'opère au moyen d'une baguette guidée spécialement, où l'électrode est constituée de tungstène avec comme composant partiel à raison de 2 à 4 % de l'oxyde de thorium dont la grosseur de particules est de 6 à 12 μ.

Abb. 1

Abb. 2